# EUROPEAN PATENT APPLICATION

(11) **EP 4 484 302 A1**
(43) Date of publication of application: **01.01.2025**
(21) Application number: 24168472.9
(22) Date of filing: 04.04.2024
(51) Int. Cl.: B64D 45/08, B64F 1/00, B64F 1/20, B64U 70/95, G08G 5/02, G06T 7/73, G06V 10/24, G06V 20/10

(54) **VISION-BASED VEHICLE GUIDANCE**

(30) Priority: 26.06.2023 US 202318214113
(71) Applicant: The Boeing Company, Arlington, VA 22202 (US)
(72) Inventor: Li, Rongsheng, Arlington, 22202 (US); Mefford, David K., Arlington, 22202 (US)
(74) Representative: Witte, Weller & Partner Patentanwälte mbB

(57) **Abstract**

Vision-based vehicle guidance is disclosed. An example landing pad (102) for vision-based guidance of a vehicle (101) includes a first perimeter (134) of a landing area (136) defined by the landing pad, the first perimeter having a first array of first light sources, and a second perimeter (132) having a second array of second light sources, the second perimeter around the first perimeter, at least two of the first or second light sources having a different light characteristic to define a pattern to be detected by an image sensor of the vehicle for guiding the vehicle toward or away from the landing area.

## Description

### FIELD OF THE DISCLOSURE

This disclosure relates generally to vehicle guidance and, more particularly, to vision-based vehicle guidance.

### BACKGROUND

In recent years, vertical takeoff and landing (VTOL) aircraft can require guidance for landing. Specifically, passenger carrying autonomous commercial VTOL aircraft can necessitate precision positioning and attitude determination to comply with regulatory certifications. To meet the regulatory certifications, some known systems employ a ground-based augmentation system (GBAS). However, known systems that utilize GBAS can be subject to jamming/spoofing, require radio frequency (RF) spectrum allocation, and can necessitate usage of complex hardware and software to function. Accordingly, known GBAS implementations can require relatively complex and expensive equipment, devices and/or components that can also increase weight of the VTOL aircraft.

### SUMMARY

An example landing pad for vision-based guidance of a vehicle includes a first perimeter of a landing area defined by the landing pad, the first perimeter having a first array of first light sources, and a second perimeter having a second array of second light sources, the second perimeter around the first perimeter, at least two of the first or second light sources having a different light characteristic to define a pattern to be detected by an image sensor of the vehicle for guiding the vehicle toward or away from the landing area.

An example apparatus to guide a vehicle toward or away from a landing pad includes interface circuitry communicatively coupled to an image sensor supported by the vehicle, machine readable instructions and programmable circuitry to at least one of instantiate or execute the machine readable instructions to: identify, based on output from the image sensor, first and second perimeters of a landing area of the landing pad, the first perimeter having a first array of first light sources and the second perimeter having a second array of second light sources, wherein at least two of the first and second light sources have a different light characteristic to define a pattern, the light characteristic corresponding to at least one of a light intensity, a spectrum, a color or a brightness, calculate a position of a vehicle relative to the landing pad based on the pattern, and guide movement of the vehicle based on the position of the vehicle relative to the landing pad.

An example non-transitory machine readable storage medium includes instructions to cause programmable circuitry to at least identify, based on output from an image sensor supported by a vehicle, first and second perimeters of a landing area, the second perimeter around the first perimeter, the first perimeter having a first array of first light sources and the second perimeter having a second array of second light sources, at least two of the first and second lighting sources having a different light characteristic to define a pattern, calculate a relative position of the vehicle to a landing pad based on the pattern and at least one distance associated with the identified first and second perimeters, and guide movement of the vehicle based on the relative position.

### BRIEF DESCRIPTION OF THE DRAWINGS

FIG. 1 is an example vision-based guidance system in accordance with teachings of this disclosure.
FIG. 2 is a detailed top view of an example landing pad of the example vision-based guidance system of FIG. 1.
FIG. 3 depicts an example landing sequence according to examples disclosed herein.
FIGS. 4A-4E depict alternative example landing pad arrangements that can be implemented in examples disclosed herein.
FIG. 5 is a block diagram of an example vision-based guidance analysis system in accordance with teachings of this disclosure.
FIG. 6 is a flowchart representative of example machine readable instructions and/or example operations that may be executed, instantiated, and/or performed by example programmable circuitry to implement the vision-based guidance analysis system of FIG. 5.
FIG. 7 is a block diagram of an example processing platform including programmable circuitry structured to execute, instantiate, and/or perform the example machine readable instructions and/or perform the example operations of FIGS. 6 to implement the vision-based guidance analysis system of FIG. 5.
FIG. 8 is a block diagram of an example implementation of the programmable circuitry of FIG. 7.
FIG. 9 is a block diagram of another example implementation of the programmable circuitry of FIG. 7.

In general, the same reference numbers will be used throughout the drawing(s) and accompanying written description to refer to the same or like parts. The figures are not necessarily to scale. Instead, the thickness of the layers or regions may be enlarged in the drawings. Although the figures show layers and regions with clean lines and boundaries, some or all of these lines and/or boundaries may be idealized. In reality, the boundaries and/or lines may be unobservable, blended, and/or irregular.

As used herein, unless otherwise stated, the term "above" describes the relationship of two parts relative to Earth. A first part is above a second part, if the second part has at least one part between Earth and the first part. Likewise, as used herein, a first part is "below" a second part when the first part is closer to the Earth than the second part. As noted above, a first part can be above or below a second part with one or more of: other parts therebetween, without other parts therebetween, with the first and second parts touching, or without the first and second parts being in direct contact with one another.

As used in this patent, stating that any part is in any way on (e.g., positioned on, located on, disposed on, or formed on, etc.) another part, indicates that the referenced part is either in contact with the other part, or that the referenced part is above the other part with one or more intermediate part(s) located therebetween.

As used herein, connection references (e.g., attached, coupled, connected, and joined) may include intermediate members between the elements referenced by the connection reference and/or relative movement between those elements unless otherwise indicated. As such, connection references do not necessarily infer that two elements are directly connected and/or in fixed relation to each other. As used herein, stating that any part is in "contact" with another part is defined to mean that there is no intermediate part between the two parts.

Unless specifically stated otherwise, descriptors such as "first," "second," "third," etc., are used herein without imputing or otherwise indicating any meaning of priority, physical order, arrangement in a list, and/or ordering in any way, but are merely used as labels and/or arbitrary names to distinguish elements for ease of understanding the disclosed examples. In some examples, the descriptor "first" may be used to refer to an element in the detailed description, while the same element may be referred to in a claim with a different descriptor such as "second" or "third." In such instances, it should be understood that such descriptors are used merely for identifying those elements distinctly within the context of the discussion (e.g., within a claim) in which the elements might, for example, otherwise share a same name.

As used herein, "approximately" and "about" modify their subjects/values to recognize the potential presence of variations that occur in real world applications. For example, "approximately" and "about" may modify dimensions that may not be exact due to manufacturing tolerances and/or other real world imperfections as will be understood by persons of ordinary skill in the art. For example, "approximately" and "about" may indicate such dimensions may be within a tolerance range of +/- 10% unless otherwise specified in the below description.

As used herein "substantially real time" refers to occurrence in a near instantaneous manner recognizing there may be real world delays for computing time, transmission, etc. Thus, unless otherwise specified, "substantially real time" refers to real time + 1 second.

As used herein, the phrase "in communication," including variations thereof, encompasses direct communication and/or indirect communication through one or more intermediary components, and does not require direct physical (e.g., wired) communication and/or constant communication, but rather additionally includes selective communication at periodic intervals, scheduled intervals, aperiodic intervals, and/or one-time events.

As used herein, "programmable circuitry" is defined to include (i) one or more special purpose electrical circuits (e.g., an application specific circuit (ASIC)) structured to perform specific operation(s) and including one or more semiconductor-based logic devices (e.g., electrical hardware implemented by one or more transistors), and/or (ii) one or more general purpose semiconductor-based electrical circuits programmable with instructions to perform specific functions(s) and/or operation(s) and including one or more semiconductor-based logic devices (e.g., electrical hardware implemented by one or more transistors). Examples of programmable circuitry include programmable microprocessors such as Central Processor Units (CPUs) that may execute first instructions to perform one or more operations and/or functions, Field Programmable Gate Arrays (FPGAs) that may be programmed with second instructions to cause configuration and/or structuring of the FPGAs to instantiate one or more operations and/or functions corresponding to the first instructions, Graphics Processor Units (GPUs) that may execute first instructions to perform one or more operations and/or functions, Digital Signal Processors (DSPs) that may execute first instructions to perform one or more operations and/or functions, XPUs, Network Processing Units (NPUs) one or more microcontrollers that may execute first instructions to perform one or more operations and/or functions and/or integrated circuits such as Application Specific Integrated Circuits (ASICs). For example, an XPU may be implemented by a heterogeneous computing system including multiple types of programmable circuitry (e.g., one or more FPGAs, one or more CPUs, one or more GPUs, one or more NPUs, one or more DSPs, etc., and/or any combination(s) thereof), and orchestration technology (e.g., application programming interface(s) (API(s)) that may assign computing task(s) to whichever one(s) of the multiple types of programmable circuitry is/are suited and available to perform the computing task(s).

As used herein integrated circuit/circuitry is defined as one or more semiconductor packages containing one or more circuit elements such as transistors, capacitors, inductors, resistors, current paths, diodes, etc. For example an integrated circuit may be implemented as one or more of an ASIC, an FPGA, a chip, a microchip, programmable circuitry, a semiconductor substrate coupling multiple circuit elements, a system on chip (SoC), etc.

As used herein, the term "light characteristic" refers to, but is not limited to, light intensity, light frequency characteristics/spectrum, light source size, blinking patterns, light transmission characteristics, etc. As used herein, the term "pattern" refers to a pattern and/or arrangement of detectable light sources that can be two-dimensional or three-dimensional. As used herein, the terms "surrounding" and "surround" refer to a first object extending around, encircling and/or encircling a second object.

### DETAILED DESCRIPTION

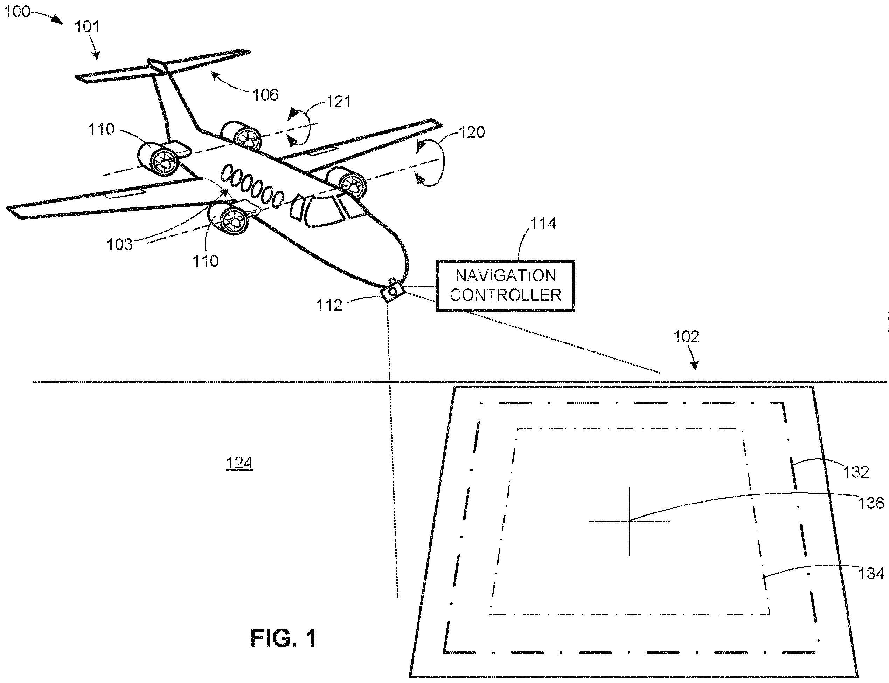

FIG. 1 is an example vision-based guidance system 100 in accordance with teachings of this disclosure. In the illustrated view of FIG. 1, an example aircraft 101 is shown being guided by a landing pad (e.g., a vehicle pad, a landing/deployment pad, a vertiport, etc.) 102 to land thereon. In this example, the aircraft 101 includes a fuselage 103, a rear/aft portion 106, as well as ducted fans (e.g., ducted fan assemblies) 110. Further, the aircraft 101 includes at least one sensor 112, which is implemented as a camera, a light detection device and/or an image sensor in this example, and a navigation controller 114.

In operation, the aircraft 101 is implemented as a vertical takeoff and landing (VTOL) aircraft such that the aircraft 101 can be switched between a hover mode (e.g., a hovering mode, a takeoff mode, etc.), and a cruise mode (e.g., a primary flight mode, a cruising mode, etc.) by moving, rotating and/or orienting the ducted fans 110. To place the example aircraft 101 in the hover mode or the cruise mode, the ducted fans 110 (and/or an aerodynamic body coupled thereto) can rotate relative to the fuselage 103, as generally indicated by double arrows 120, 121. While the aircraft 101 is a VTOL aircraft in this example, examples disclosed herein can be implemented on any other aircraft including, but not limited to, fixed wing aircraft, short takeoff and landing (STOL) aircraft, rotorcraft, aircraft with fan arrays, etc. Further, examples disclosed herein can be implemented in other types of manned or unmanned vehicles including, but not limited to, hovercraft, watercraft, submersibles, spacecraft, etc.

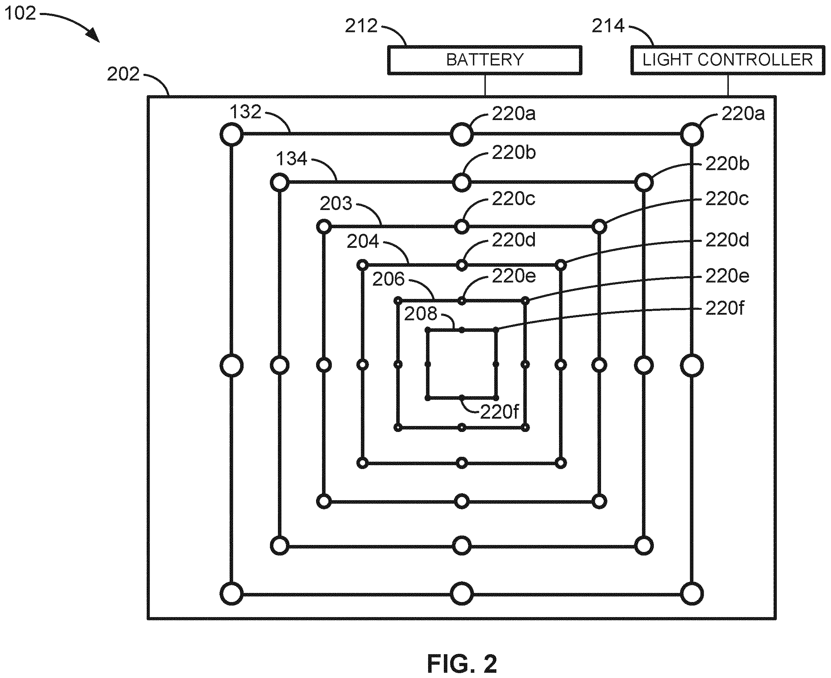

To enable the aircraft 101 to be guided to land on the example landing pad 102, once the aircraft 101 reaches a general vicinity or area of the landing pad 102, the landing pad 102 is placed onto a ground surface 124, and includes a detectable pattern to guide the aircraft 101 thereto. The example landing pad 102 includes a first perimeter 132 surrounds or extends around a second perimeter 134, both of which are generally quadrilateral in shape (e.g., rectangular and/or square in shape, etc.). However, the first and second perimeters 132, 134 can be any other appropriate shape and/or geometric profile. As will be discussed in greater detail below in connection with FIGS. 2-6, examples disclosed herein enable cost-effective guidance of the aircraft 101 for landing or takeoff from the landing pad 102. According to examples disclosed herein, the first and second perimeters 132, 134 each include respective light sources (e.g., light emitters, powered light sources, etc.) spaced apart (e.g., evenly spaced apart, irregularly spaced apart, etc.) along the lengths which they extend such that at least two of the light sources have a different light characteristic from one another, thereby defining a pattern (e.g., a two-dimensional pattern, a star pattern, a constellation pattern, etc.). In this example, visual detection of the aforementioned light sources based on sensor output of the sensor(s) 112 enables the navigation controller 114 to determine, identify and/or discern the pattern and, thus, calculate a relative distance/position/attitude/orientation of the aircraft 101 to the landing pad 102 and/or a landing area/target 136 of the landing pad 102. In this example, the landing area/target 136 corresponds to a centroid of at least one of the perimeters 132, 134 and/or a centroid of a general shape/border of the landing pad 102.

In some examples, the sensor(s) 112 include(s) a filter (e.g., a polarizing filter, a light spectrum filter, etc.) to detect the light sources of the perimeters 132, 134. Additionally, or alternatively, the light sources of the perimeters 132, 134 are shifted in frequency to facilitate detection thereof (e.g., shifted toward a blue region of a light frequency spectrum) by the sensor(s) 112. In some such examples, the filter is tuned and/or adjusted based on characteristics of the light sources (e.g., the filter is shifted in frequency to facilitate detection of the light sources from a relatively far distance and/or through inclement weather conditions, etc.).

FIG. 2 is a detailed top view of the example landing pad 102 of the example vision-based guidance system 100 shown in FIG. 1. In this example, the landing pad 102 is portable and, thus, can be easily transported and deployed to a site (e.g., a landing site, a landing site of a designated landing area designated for the aircraft 101, etc.). In other words, the landing pad 102 can be easily carried to the site to guide the aircraft 101 to land on the landing pad 102 in a relatively quick manner. The site can correspond to a general area in which the aircraft 101 is designated to land such that the aircraft 101 is directed to the general area or vicinity (e.g., a landing volume) of the landing pad 102 via conventional systems and/or methodologies, such as a global positioning system (GPS) or other global navigation satellite system (GNSS) or position navigation and time (PNT) implementation and/or methodology. However, examples disclosed herein can be utilized for precision guidance to land the aircraft 101 on the landing pad 102 (e.g., in a final landing sequence). Examples disclosed herein can also be utilized for deploying/launching the aircraft 101 such that the landing pad 102 can be utilized to guide the aircraft 101 to ascend to a height or altitude associated with a flight/cruise mode of the aircraft 101. Examples disclosed herein can also correspond to guiding gliding aircraft (e.g., guidance for fixed wing aircraft, motion with a horizontal/lateral component, etc.) to land, as well as takeoff of such aircraft. In particular, examples disclosed herein can support landing/takeoff on a glide-path in addition to vertical landing/takeoff.

The landing pad 102 of the illustrated example includes a body (e.g., a main body, a substrate, a layered pad, a flexible pad, etc.) 202, the aforementioned perimeters 132, 134, as well as inner perimeters (e.g., central perimeters, intermediate guidance perimeters, final guidance perimeters, etc.) 203, 204, 206, 208. In this example, the perimeter 132 includes light sources 220a, the perimeter 134 includes light sources 220b, the perimeter 203 includes light sources 220c, the perimeter 204 includes light sources 220d, the perimeter 206 includes light sources 220e, and the perimeter 208 includes light sources 220f.

According to some examples disclosed herein, to guide the aircraft 101 toward the landing pad 102, the sensor(s) 112 of FIG. 1 initially detect(s) the light sources 220a of the outer perimeter 132 (e.g., a requisite amount of the light sources 220a to discern the perimeter 132, etc.) based on a field of view of the sensor(s) 112 with respect to the landing pad 102 and/or the ground surface 124. To facilitate detection of the light sources 220a at a relatively far range, the example light sources 220a may have a corresponding light intensity that is greater than that of the light sources 202b, 202c, 202d, 202e, 202f. In turn, the light sources 202b may have a corresponding light intensity that is greater than that of the light sources 202c and, similarly, the light sources 202c can have a corresponding light intensity that is greater than the light sources 202d (and so forth). Accordingly, the navigation controller 114 can guide (e.g., in a hover mode, in a gliding mode, in an STOL mode, in a VTOL mode, etc.) the aircraft 101 relative to the landing pad 102 based on the perimeter 132. In turn, as the aircraft 101 descends, the aircraft 101 then detects the light sources 220b of the perimeter 134 and, in turn, with a further descent, can detect the light sources 220c of the perimeter 203 (and so forth). In other words, some examples disclosed herein can utilize different perimeters of light sources (e.g., a subset of the different perimeters) based on different distances/heights of the aircraft 101 with respect to the landing pad 102.

Conversely, to guide the aircraft 101 away from the landing pad 102 (e.g., prior to the aircraft 101 switching to another navigation/flight mode, etc.), the sensor(s) 112 of the aircraft 101 can initially utilize an inner perimeter, such as the perimeter 206 or the perimeter 208, and subsequently utilize outer perimeters (e.g., the perimeters 204, 203, 134, 132) as the aircraft 101 ascends and/or moves further away from the landing pad 102, for example. In other words, examples disclosed can enable guidance for landing/recovery, as well as launch/ascent. In particular, examples disclosed herein can improve heading and attitude accuracy for the launch/ascent by detecting the perimeters 132, 134, 203, 204, 206, 208 with the sensor(s) 112.

In some examples, a known or predefined size of at least one of the perimeters 132, 134, 203, 204, 206, 208, in conjunction with angular data of the sensor(s) 112, enables the navigation controller 114 to determine a relative position/distance between the aircraft 101 and the landing pad 102. In some such examples, the navigation controller 114 utilizes different light characteristics of the light sources to discern and/or identify a pattern (e.g., a star pattern) of the light sources in conjunction with the aforementioned angular data and at least one known or predefined spatial relationship(s) between at least two of the perimeters 132, 134, 203, 204, 206, 208 to calculate the relative distance between the aircraft 101 and the landing pad 102.

According to examples disclosed herein, spacing between the perimeters 132, 134, 203, 204, 206, 208 decreases along a direction from the other perimeter 132 to the inner perimeter 208. For example, spacing between the perimeters 132, 134 is greater than spacing between the perimeters 134, 203 (as well as spacing between the perimeters 206, 208), for example.

According to examples disclosed herein, to enable the navigation controller 114 to differentiate and/or identify a pattern associated with the perimeters 132, 134, 203, 204, 206, 208, light intensities of at least two of the light sources 202a, 202b, 202c, 202d, 202e, 202f can be different, thereby defining a pattern (e.g., a star pattern, a constellation pattern, etc.). The pattern may be utilized to determine and/or ascertain known dimensions and/or dimensional relationships of the perimeters 132, 134, 203, 204, 206, 208. In a particular example, the light sources 202a of the outer perimeter 132 can have a greater light intensity than that of the other light sources 202b (and any other of the light sources 202b, 202c, 202d, 202e, 202f), thereby enabling the light sources 202a to be detected even when the aircraft 101 is at a relatively far distance, such as 500 meters (m) for example, from the landing pad 102. According to examples disclosed herein, the light sources 202b can have a greater intensity than the light sources 202c, and the light sources can have a greater intensity than the light sources 202d (and so forth). The varying intensity of at least two of the light sources 202a, 202b, 202c, 202d, 202e, 202f can be based on utilization of different light source components, such as light-emitting diodes (LEDs), different light source sizes (e.g., light array sizes), brightness characteristics and/or controlling different voltages provided to the same. Additionally or alternatively, spectrum/color, locations and/or patterns of the 202a, 202b, 202c, 202d, 202e, 202f are utilized to define identifiable characteristics and/or guidance utilization with respect to the landing pad 102. In other examples, to increase light intensity, multiple light source components may be utilized at a single light source location (e.g., two or more LEDs clustered together). Additionally, or alternatively, at least two of the light sources 202a, 202b, 202c, 202d, 202e, 202f are caused to blink and/or repeat at different frequencies and/or different blinking patterns from one another so that the navigation controller 114 can identify the pattern and/or differentiate between different perimeters (e.g., based on known or predefined perimeter data, etc.). Additionally, or alternatively, the light sources 202a, 202b, 202c, 202d, 202e, 202f within the same respective perimeters 132, 134, 203, 204, 206, 208 can be operated with different blinking patterns from one another.

In some examples, the landing pad 102 is foldable (e.g., the landing pad 102 can be rolled to be carried by a person, the landing pad 102 is folded into quadrants, the landing pad 102 is folded/collapsed in a similar manner to an accordion, etc.). According to some examples disclosed herein, a battery 212 can be implemented to supply power to the light sources 202a, 202b, 202c, 202d, 202e, 202f. However, any other appropriate power source can be implemented instead (e.g., a solar panel, a windmill, a wind turbine, a generator, etc.). In some examples, a light controller 214 is utilized to control an intensity and/or a blinking sequence of the light sources 202a, 202b, 202c, 202d, 202e, 202f. In other examples, the landing pad 102 is not portable and, instead, permanently fixed, integrated and/or defined on a surface, ground, terrain, or floor. In some examples, the light sources 202a, 202b, 202c, 202d, 202e, 202f are implemented as non-visible light transmitters including, but not limited to, infrared (IR) or near-IR range transmitters.

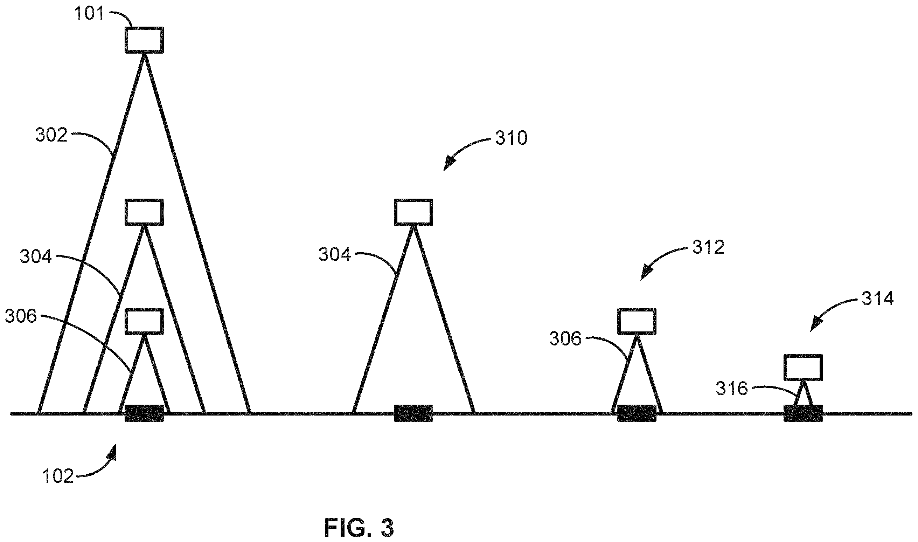

FIG. 3 depicts an example landing sequence according to examples disclosed herein. In the illustrated view of FIG. 3, the aircraft 101 is shown descending toward the landing pad 102. As the aircraft 101 descends toward the landing pad 102, different field of view (FOV) cones 302, 304, 306 apply such that a viewable area of the landing pad 102 (by the sensor(s) 112) can decrease as the aircraft 101 approaches the landing pad 102. Step 310 depicts the aircraft 101 at an intermediate height corresponding to the cone 304 while step 312 depicts the aircraft 101 approaching a close proximity to the landing pad 102 corresponding to the cone 306. Step 314 depicts a cone 316 corresponding to the aircraft 101 about to contact the landing pad 102. Examples disclosed can use one or more of the perimeters that are currently viewable at a given time and/or a time period.

In this example, angular data is utilized while detecting emitted light and/or a light pattern from the landing pad 102. In a specific example, the sensor(s) 112 can have a field of view of 45 degrees (°) and a pixel size of approximately 0.02° such that a height of the aircraft 101 above the landing pad 102 at approximately 500 m can result in a covered area of approximately 400 meters squared (m²) with a ground pixel size of approximately 0.2 m. Conversely, a height of the aircraft 101 above the landing pad 102 of approximately 1.0 m corresponds to a viewable area of approximately 0.8 m² and a pixel size of approximately 0.0004 m. Accordingly, examples disclosed herein can accurately determine and/or discern a visual pattern of the landing pad 102 from a height of approximately 500 meters to a height less than or equal to approximately 1 m. The examples described above are merely examples and any appropriate other dimensions and/or angular characteristics can be implemented instead. While the example of FIG. 3 is shown in the context of a hovering aircraft (e.g., an STOL aircraft, a VTOL aircraft, etc.), examples disclosed herein can be utilized in conjunction with fixed wing aircraft and/or gliding aircraft.

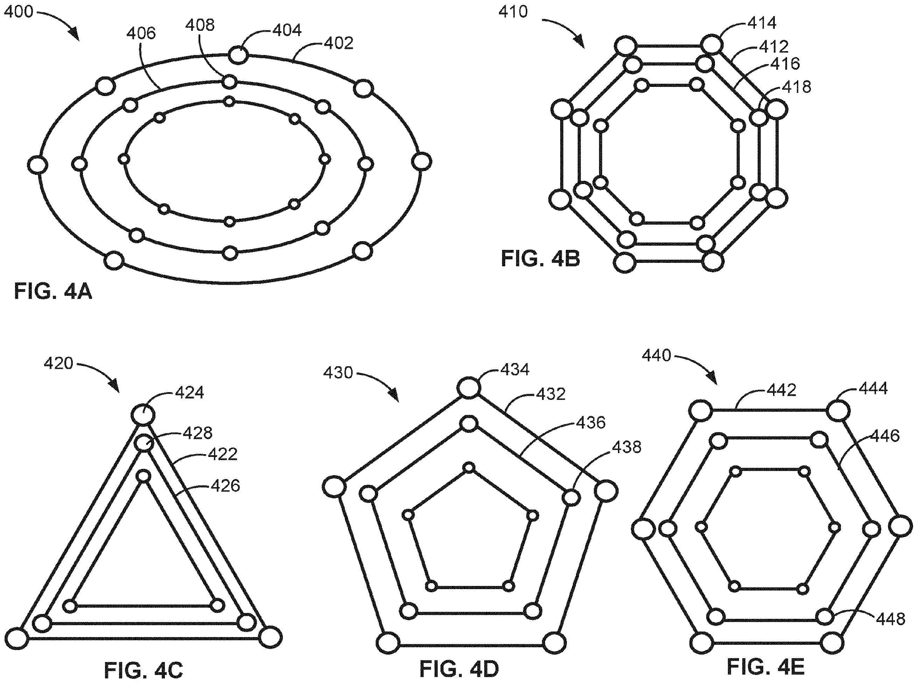

FIGS. 4A-4E depict alternative example landing pad arrangements 400, 410, 420, 430, 440 that can be implemented in examples disclosed herein. Turning to FIG. 4A, the example landing pad arrangement 400 is shown. In this example, the landing pad 400 includes an outer perimeter 402 having light sources 404 spaced along a length thereof. The example perimeter 402 surrounds, encircles and/or extends around at least one inner perimeter 406 having respective light sources 408. In this example, the perimeters 402, 406 are generally ellipsoid in shape.

FIG. 4B depicts the example landing pad arrangement 410 with an outer perimeter 412 that includes light sources 414 arranged thereon. In the illustrated example, the perimeter 412 surrounds at least one inner perimeter 416 having respective light sources 418. In this particular example, the perimeters 412, 416 are each generally octagonal in shape. However, any other appropriate shape and/or polygonal perimeter shape can be implemented instead.

Turning to FIG. 4C, the example landing pad arrangement 420 includes an outer perimeter 422 which, in turn, includes light sources 424. In the illustrated example, the perimeter 422 surrounds at least one inner perimeter 426 having respective light sources 428. In this particular example, the perimeters 422, 426 are generally triangular in shape.

FIG. 4D depicts an example landing pad arrangement 430. The landing pad arrangement 430 of the illustrated example includes an outer perimeter 432 having light sources 434. Further, in the illustrated example of FIG. 4D, the perimeter 432 surrounds at least one inner perimeter 436 having respective light sources 438. In this particular example, the perimeters 432, 436 are generally pentagonal shaped.

FIG. 4E depicts the example landing pad arrangement 440 with an outer perimeter 442 that includes light sources 444 arranged thereon. In the illustrated example, the perimeter 442 surrounds at least one inner perimeter 446 having respective light sources 448. In this particular example, the perimeters 442, 446 are each generally hexagonal in shape. However, as mentioned above, any other appropriate shape and/or polygonal perimeter shape can be implemented instead.

The examples of FIGS. 1-2, 4A-4E are only examples and not limiting, and any other appropriate shape and/or geometric relationship can be implemented instead. While the examples of FIGS. 1-2, 4A-4E each have similarly shaped perimeters of light sources surrounding and/or encompassing one another, in other examples, a landing pad can have perimeters of different shapes (e.g., a rectangular perimeter surrounding an ellipsoid perimeter, a circular perimeter surrounding a rectangular perimeter, etc.).

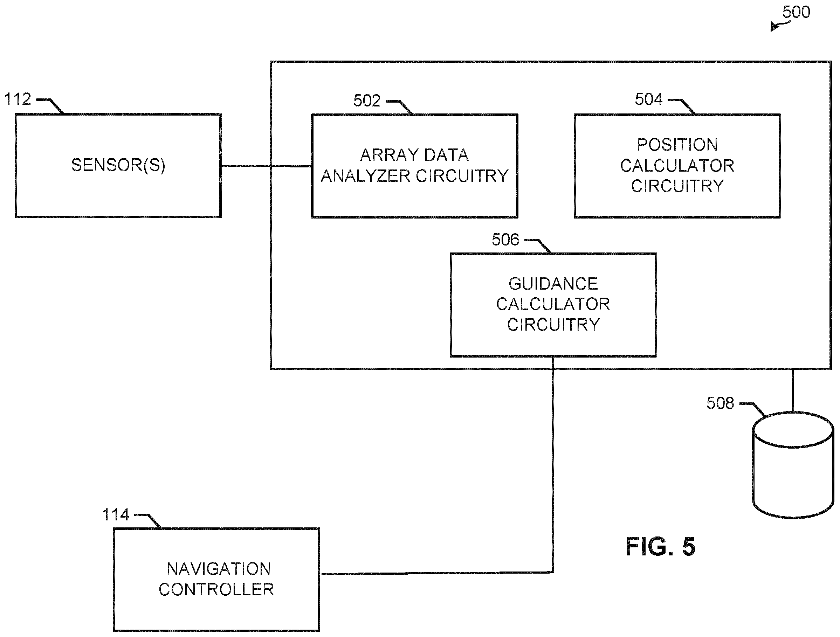

FIG. 5 is a block diagram of an example implementation of the vision-based guidance system 100 of FIG. 1 to direct guidance based on detection of perimeter light sources that define a pattern (e.g., a star pattern defined by variances of at least two of the light sources). The example vision-based guidance analysis system 500 can be implemented in at least one of a vehicle (e.g., the aircraft 101), the navigation controller 114, or in a computing system communicatively coupled to the vehicle (e.g., via a network). The example vision-based guidance analysis system 500 of FIG. 5 may be instantiated (e.g., creating an instance of, bring into being for any length of time, materialize, implement, etc.) by programmable circuitry such as a Central Processor Unit (CPU) executing first instructions. Additionally, or alternatively, the example vision-based guidance analysis system 500 of FIG. 5 may be instantiated (e.g., creating an instance of, bring into being for any length of time, materialize, implement, etc.) by (i) an Application Specific Integrated Circuit (ASIC) and/or (ii) a Field Programmable Gate Array (FPGA) structured and/or configured in response to execution of second instructions to perform operations corresponding to the first instructions. It should be understood that some or all of the circuitry of FIG. 5 may, thus, be instantiated at the same or different times. Some or all of the circuitry of FIG. 5 may be instantiated, for example, in one or more threads executing concurrently on hardware and/or in series on hardware. Moreover, in some examples, some or all of the circuitry of FIG. 5 may be implemented by microprocessor circuitry executing instructions and/or FPGA circuitry performing operations to implement one or more virtual machines and/or containers.

The vision-based guidance analysis system 500 of the illustrated example includes example array data analyzer circuitry 502, example position calculator circuitry 504, example guidance calculator circuitry 506, and example landing pad database storage 508. In this example, the vision-based guidance analysis system 500 includes, is part of and/or is communicatively coupled to the navigation controller 114 and/or the sensor(s) 112 shown in FIG. 1.

In the illustrated example of FIG. 5, the array data analyzer circuitry 502 is utilized to analyze information corresponding to sensor output from the sensor(s) 112 for determination of a presence of at least one perimeter with light sources. In particular examples, the array data analyzer circuitry 502 utilizes the information to determine and/or identify a pattern, an outline and/or general shape of the perimeter(s). In some examples, the array data analyzer circuitry 502 utilizes characteristics of perimeters and/or landing pads stored in the landing pad database storage 508. Additionally, or alternatively, characteristics (e.g., dimensions, sizes, perimeter spatial relationships, etc.) of a landing pad are identified by accessing/querying information from the landing pad database storage 508 based on a discerned pattern of the perimeter(s). In some examples, the array data analyzer circuitry 502 generates a vector of the light sources.

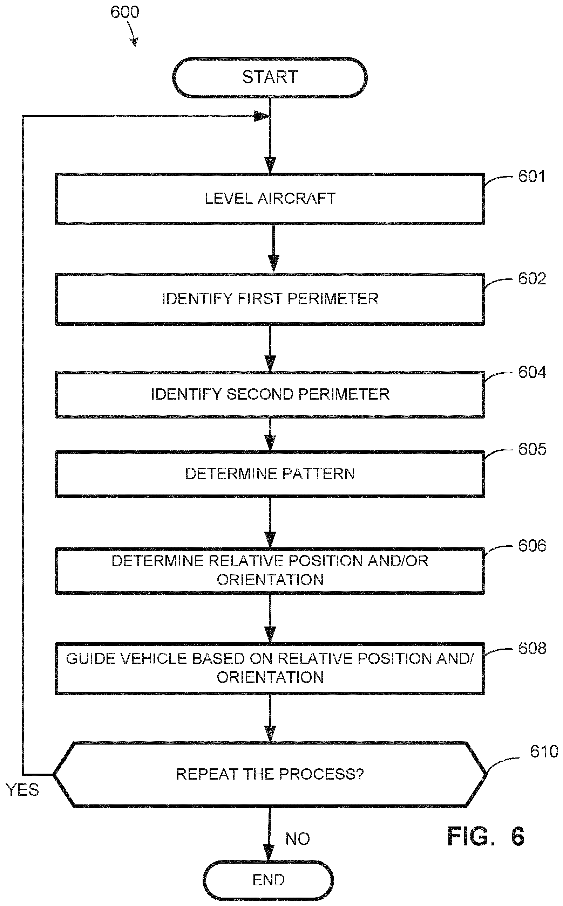

In this example, the position calculator circuitry 504 calculates and/or determines a relative position and/or distance between the vehicle and the landing pad. In particular, the example position calculator circuitry 504 can determine a relative distance between the vehicle and a centroid or landing portion of the landing pad. According to examples disclosed herein, the position calculator circuitry 504 determines the relative position and/or distance based on a pattern of the light sources having at least two with different light characteristics (e.g., light intensity, blinking patterns, etc.) in conjunction with at least one known or presumed distance of the detected perimeter (e.g., a length and/or a width, a diameter, etc.). Accordingly, the relative position and/or distance may be determined based on angular characteristics of the perimeter(s) measured by the sensor(s) in conjunction with the at least one known or presumed distance. Additionally, or alternatively, the position calculator circuitry 504 utilizes two-dimensional properties and/or patterns of the perimeter(s) to calculate the relative position and/or distance (e.g., a known length of a segment of the perimeter in conjunction with an angle measured by the sensor(s) is utilized). In some examples, the relative position and/or distance is calculated to a centroid of the perimeter(s). In some such examples, the centroid is determined based on vectors (e.g., line of sight vectors) defined by the light sources and/or a pattern of the light sources. In some examples, the position calculator circuitry 504 is instantiated by programmable circuitry executing position calculator instructions and/or configured to perform operations such as those represented by the flowchart of FIG. 6.

The example guidance calculator circuitry 506 is implemented to guide the vehicle based on the determined relative position and/or distance between the vehicle and the landing pad. In this example, the guidance calculator circuitry 506 stabilizes a horizontal alignment (e.g., relative to ground) prior to guiding the vehicle toward the landing pad (e.g., in a descent) or away from the landing pad (e.g., in a launch or an ascent). In some examples, the guidance calculator circuitry 506 is instantiated by programmable circuitry executing guidance calculator circuitry instructions and/or configured to perform operations such as those represented by the flowchart of FIG. 6.

In some examples, the position calculator circuitry 504 and/or the guidance calculator circuitry 506 derives and/or calculates a position of the aircraft, an attitude of the aircraft, and/or sensor misalignment based on sensor data/ corresponding to the sensor(s). In some such examples, the data can be combined with IMU (Inertial Measurement Unit) data, or INS (Inertial Navigation System) data, AHRS (Attitude/Heading Reference System) data, and/or inertial data. In particular, a fusion algorithm (e.g., a Kalman Filter) can be utilized to fuse the data for improved performance, increased availability, and improved data integrity, for example. Additionally or alternatively, the position calculator circuitry 504 and/or the guidance calculator circuitry 506 can perform fault detection, containment and response. To that end, the position calculator circuitry 504 and/or the guidance calculator circuitry 506 can perform redundancy management to maintain proper operation by managing a combination of multiple sensors (e.g., cameras), in conjunction with IMU, INS and/or AHRS systems. The data may be integrated with an altimeter of the aircraft, for example.

According to examples disclosed herein, the landing pad database storage 508 is implemented to store data related to landing pads and/or landing pad arrangements. For example, the landing pad database storage 508 can store information related to dimensional arrangements of perimeters of landing pads, two-dimensional patterns of perimeters, distance relationships between perimeters, shape/geometry information, specific landing pad site dimensions, blinking patterns, light source intensity maps, a number of perimeters, etc.

While an example manner of implementing the vision-based guidance system 100 of FIG. 1 is illustrated in FIG. 5, one or more of the elements, processes, and/or devices illustrated in FIG. 5 may be combined, divided, re-arranged, omitted, eliminated, and/or implemented in any other way. Further, the example array data analyzer circuitry 502, the example position calculator circuitry 504, the example guidance calculator circuitry 506, and/or, more generally, the example vision-based guidance analysis system 500 of FIG. 5, may be implemented by hardware alone or by hardware in combination with software and/or firmware. Thus, for example, any of the example array data analyzer circuitry 502, the example position calculator circuitry 504, the example guidance calculator circuitry 506, and/or, more generally, the example vision-based guidance analysis system 500, could be implemented by programmable circuitry in combination with machine readable instructions (e.g., firmware or software), processor circuitry, analog circuit(s), digital circuit(s), logic circuit(s), programmable processor(s), programmable microcontroller(s), graphics processing unit(s) (GPU(s)), digital signal processor(s) (DSP(s)), ASIC(s), programmable logic device(s) (PLD(s)), and/or field programmable logic device(s) (FPLD(s)) such as FPGAs. Further still, the example vision-based guidance analysis system 500 of FIG. 5 may include one or more elements, processes, and/or devices in addition to, or instead of, those illustrated in FIG. 5, and/or may include more than one of any or all of the illustrated elements, processes and devices.

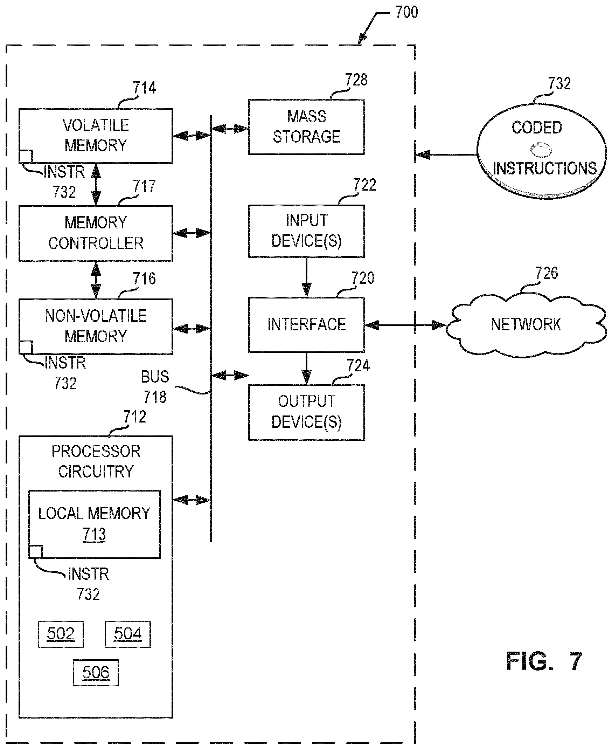

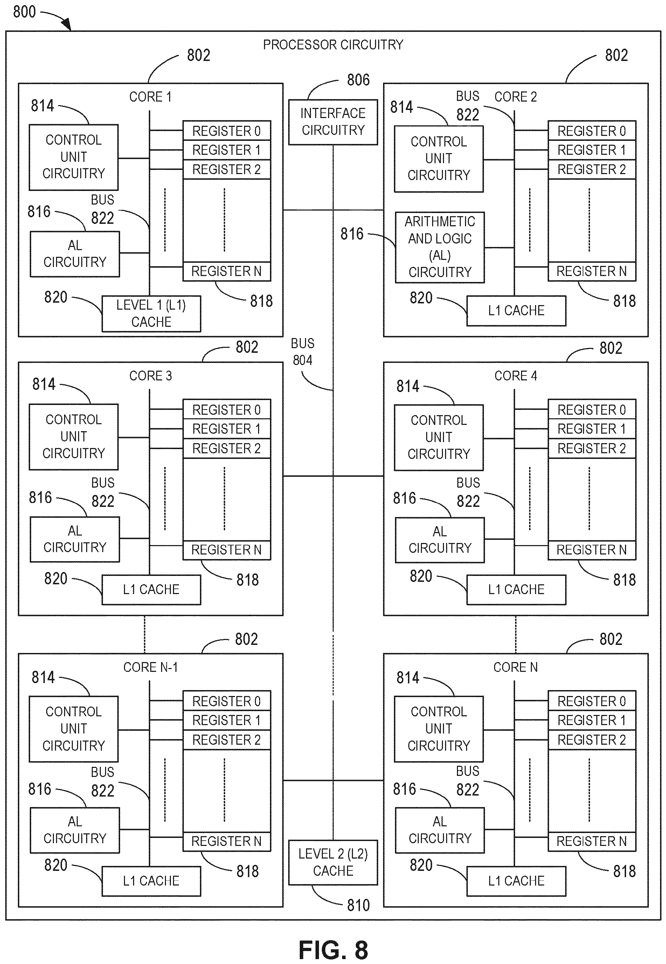

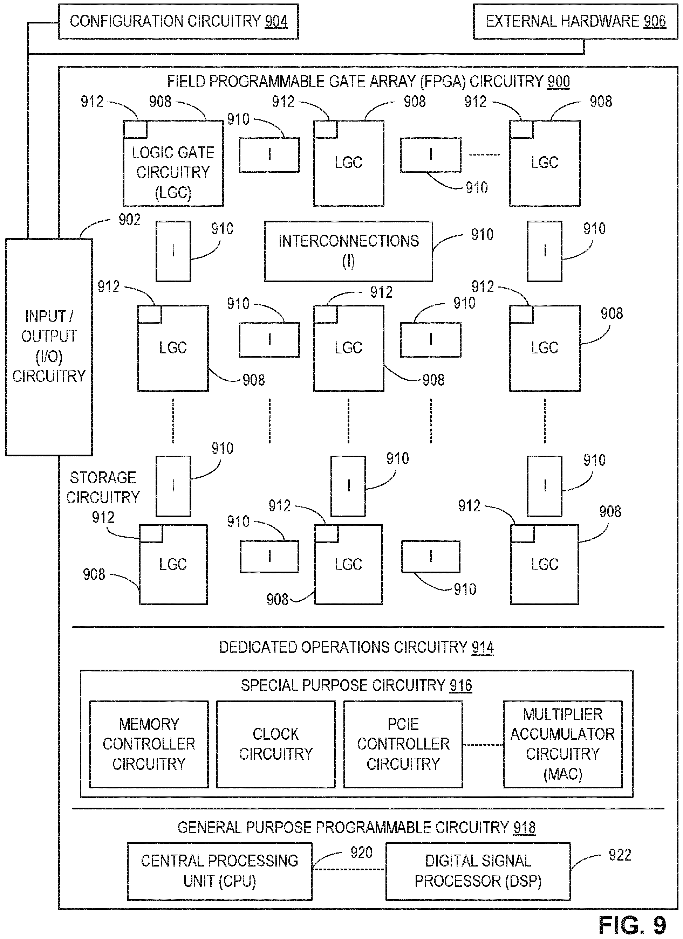

A flowchart representative of example machine readable instructions, which may be executed by programmable circuitry to implement and/or instantiate the vision-based guidance analysis system 500 of FIG. 5 and/or representative of example operations which may be performed by programmable circuitry to implement and/or instantiate the vision-based guidance analysis system 500 of FIG. 5, is shown in FIG. 6. The machine readable instructions may be one or more executable programs or portion(s) of one or more executable programs for execution by programmable circuitry such as the programmable circuitry 712 shown in the example processor platform 700 discussed below in connection with FIG. 7 and/or may be one or more function(s) or portion(s) of functions to be performed by the example programmable circuitry (e.g., an FPGA) discussed below in connection with FIGS. 8 and/or 9. In some examples, the machine readable instructions cause an operation, a task, etc., to be carried out and/or performed in an automated manner in the real world. As used herein, "automated" means without human involvement.

The program may be embodied in instructions (e.g., software and/or firmware) stored on one or more non-transitory computer readable and/or machine readable storage medium such as cache memory, a magnetic-storage device or disk (e.g., a floppy disk, a Hard Disk Drive (HDD), etc.), an optical-storage device or disk (e.g., a Blu-ray disk, a Compact Disk (CD), a Digital Versatile Disk (DVD), etc.), a Redundant Array of Independent Disks (RAID), a register, ROM, a solid-state drive (SSD), SSD memory, non-volatile memory (e.g., electrically erasable programmable read-only memory (EEPROM), flash memory, etc.), volatile memory (e.g., Random Access Memory (RAM) of any type, etc.), and/or any other storage device or storage disk. The instructions of the non-transitory computer readable and/or machine readable medium may program and/or be executed by programmable circuitry located in one or more hardware devices, but the entire program and/or parts thereof could alternatively be executed and/or instantiated by one or more hardware devices other than the programmable circuitry and/or embodied in dedicated hardware. The machine readable instructions may be distributed across multiple hardware devices and/or executed by two or more hardware devices (e.g., a server and a client hardware device). For example, the client hardware device may be implemented by an endpoint client hardware device (e.g., a hardware device associated with a human and/or machine user) or an intermediate client hardware device gateway (e.g., a radio access network (RAN)) that may facilitate communication between a server and an endpoint client hardware device. Similarly, the non-transitory computer readable storage medium may include one or more mediums. Further, although the example program is described with reference to the flowchart illustrated in FIG. 6, many other methods of implementing the example vision-based guidance analysis system 500 may alternatively be used. For example, the order of execution of the blocks of the flowchart may be changed, and/or some of the blocks described may be changed, eliminated, or combined. Additionally, or alternatively, any or all of the blocks of the flow chart may be implemented by one or more hardware circuits (e.g., processor circuitry, discrete and/or integrated analog and/or digital circuitry, an FPGA, an ASIC, a comparator, an operational-amplifier (op-amp), a logic circuit, etc.) structured to perform the corresponding operation without executing software or firmware. The programmable circuitry may be distributed in different network locations and/or local to one or more hardware devices (e.g., a single-core processor (e.g., a single core CPU), a multi-core processor (e.g., a multi-core CPU, an XPU, etc.)). For example, the programmable circuitry may be a CPU and/or an FPGA located in the same package (e.g., the same integrated circuit (IC) package or in two or more separate housings), one or more processors in a single machine, multiple processors distributed across multiple servers of a server rack, multiple processors distributed across one or more server racks, etc., and/or any combination(s) thereof.

The machine readable instructions described herein may be stored in one or more of a compressed format, an encrypted format, a fragmented format, a compiled format, an executable format, a packaged format, etc. Machine readable instructions as described herein may be stored as data (e.g., computer-readable data, machine-readable data, one or more bits (e.g., one or more computer-readable bits, one or more machine-readable bits, etc.), a bitstream (e.g., a computer-readable bitstream, a machine-readable bitstream, etc.), etc.) or a data structure (e.g., as portion(s) of instructions, code, representations of code, etc.) that may be utilized to create, manufacture, and/or produce machine executable instructions. For example, the machine readable instructions may be fragmented and stored on one or more storage devices, disks and/or computing devices (e.g., servers) located at the same or different locations of a network or collection of networks (e.g., in the cloud, in edge devices, etc.). The machine readable instructions may require one or more of installation, modification, adaptation, updating, combining, supplementing, configuring, decryption, decompression, unpacking, distribution, reassignment, compilation, etc., in order to make them directly readable, interpretable, and/or executable by a computing device and/or other machine. For example, the machine readable instructions may be stored in multiple parts, which are individually compressed, encrypted, and/or stored on separate computing devices, wherein the parts when decrypted, decompressed, and/or combined form a set of computer-executable and/or machine executable instructions that implement one or more functions and/or operations that may together form a program such as that described herein.

In another example, the machine readable instructions may be stored in a state in which they may be read by programmable circuitry, but require addition of a library (e.g., a dynamic link library (DLL)), a software development kit (SDK), an application programming interface (API), etc., in order to execute the machine-readable instructions on a particular computing device or other device. In another example, the machine readable instructions may need to be configured (e.g., settings stored, data input, network addresses recorded, etc.) before the machine readable instructions and/or the corresponding program(s) can be executed in whole or in part. Thus, machine readable, computer readable and/or machine readable media, as used herein, may include instructions and/or program(s) regardless of the particular format or state of the machine readable instructions and/or program(s).

The machine readable instructions described herein can be represented by any past, present, or future instruction language, scripting language, programming language, etc. For example, the machine readable instructions may be represented using any of the following languages: C, C++, Java, C#, Perl, Python, JavaScript, HyperText Markup Language (HTML), Structured Query Language (SQL), Swift, etc.

As mentioned above, the example operations of FIG. 6 may be implemented using executable instructions (e.g., computer readable and/or machine readable instructions) stored on one or more non-transitory computer readable and/or machine readable media. As used herein, the terms non-transitory computer readable medium, non-transitory computer readable storage medium, non-transitory machine readable medium, and/or non-transitory machine readable storage medium are expressly defined to include any type of computer readable storage device and/or storage disk and to exclude propagating signals and to exclude transmission media. Examples of such non-transitory computer readable medium, non-transitory computer readable storage medium, non-transitory machine readable medium, and/or non-transitory machine readable storage medium include optical storage devices, magnetic storage devices, an HDD, a flash memory, a read-only memory (ROM), a CD, a DVD, a cache, a RAM of any type, a register, and/or any other storage device or storage disk in which information is stored for any duration (e.g., for extended time periods, permanently, for brief instances, for temporarily buffering, and/or for caching of the information). As used herein, the terms "non-transitory computer readable storage device" and "non-transitory machine readable storage device" are defined to include any physical (mechanical, magnetic and/or electrical) hardware to retain information for a time period, but to exclude propagating signals and to exclude transmission media. Examples of non-transitory computer readable storage devices and/ or non-transitory machine readable storage devices include random access memory of any type, read only memory of any type, solid state memory, flash memory, optical discs, magnetic disks, disk drives, and/or redundant array of independent disks (RAID) systems. As used herein, the term "device" refers to physical structure such as mechanical and/or electrical equipment, hardware, and/or circuitry that may or may not be configured by computer readable instructions, machine readable instructions, etc., and/or manufactured to execute computer-readable instructions, machine-readable instructions, etc.

FIG. 6 is a flowchart representative of example machine readable instructions and/or example operations 600 that may be executed, instantiated, and/or performed by programmable circuitry to direct navigation of a vehicle, such as the example aircraft 101 shown in FIG. 1. The example machine-readable instructions and/or the example operations 600 of FIG. 6 begin at block 601, at which the example guidance calculator circuitry 506 levels the aircraft (e.g., horizontally stabilizes the aircraft). In some examples, the guidance calculator circuitry 506 initiates a landing procedure once the aircraft reaches a threshold distance to a designated landing area or zone corresponding to a landing pad.

The example method 600 begins at block 602, at which the array data analyzer circuitry 502 identifies and/or detects a first perimeter. In this example, during landing, the array data analyzer circuitry 502 initially utilizes at least one sensor that detect the first perimeter as an outer perimeter having a greater light intensity and/or more easily detectable light sources than respective ones of the inner perimeter(s).

At block 604, the array data analyzer circuitry 502 identifies and/or detects a second perimeter that is enclosed and/or surrounded by the aforementioned first perimeter. In other words, the first perimeter is around (e.g., extends around) the second perimeter. According to examples disclosed herein, the second perimeter can be detected with the sensor(s) and identified along with the first perimeter or can be identified at a different time from the first perimeter (e.g., based on resolution and/or weather conditions, etc.).

At block 605, in some examples, the array data analyzer circuitry 502 and/or the example position calculator circuitry 504 identifies a pattern based on the detected first and second perimeters. For example, the array data analyzer circuitry 502 and/or the example position calculator circuitry 504 generates a two-dimensional pattern and/or a vector representation of the first and second perimeters based on data associated therewith in conjunction with known parameters and/or distances thereof stored in the example landing pad database storage 508.

At block 606, the example position calculator circuitry 504 determines and/or calculates a position and/or orientation of the aircraft relative to the landing pad. According to examples disclosed herein, the position and/or orientation can be calculated by the example position calculator circuitry 504 based on angular measurements from the sensor(s) in conjunction with known dimensional distances (e.g., two dimensional measurements) of the landing pad that are determined based on the pattern identified by the array data analyzer circuitry 502 and/or the example position calculator circuitry 504 at block 605. In some examples, the example position calculator circuitry 504 determines an attitude of the aircraft, and/or sensor misalignment data (e.g., image sensor/camera misalignment) from pattern and/or sensor output from the aforementioned sensor(s).

At block 608, the example guidance calculator circuitry 506 guides and/or directs movement of the vehicle based on the relative position and/or orientation (or other guidance information/parameters) calculated by the example position calculator circuitry 504.

At block 610, it is determined by the position calculator circuitry 504 and/or the guidance calculator circuitry 506 whether to repeat the process. If the process is to be repeated (block 610), control of the process returns to block 602. Otherwise, the process ends. The determination may be based on whether the vehicle has successfully landed or has successfully been launched/deployed.

FIG. 7 is a block diagram of an example programmable circuitry platform 700 structured to execute and/or instantiate the example machine-readable instructions and/or the example operations of FIG. 6 to implement the vision-based guidance analysis system of FIG. 5. The programmable circuitry platform 700 can be, for example, a server, a personal computer, a workstation, a self-learning machine (e.g., a neural network), a mobile device (e.g., a cell phone, a smart phone, a tablet such as an iPad^{™}), a personal digital assistant (PDA), an Internet appliance, a DVD player, a CD player, a digital video recorder, a Blu-ray player, a gaming console, a personal video recorder, a set top box, a headset (e.g., an augmented reality (AR) headset, a virtual reality (VR) headset, etc.) or other wearable device, or any other type of computing and/or electronic device.

The programmable circuitry platform 700 of the illustrated example includes programmable circuitry 712. The programmable circuitry 712 of the illustrated example is hardware. For example, the programmable circuitry 712 can be implemented by one or more integrated circuits, logic circuits, FPGAs, microprocessors, CPUs, GPUs, DSPs, and/or microcontrollers from any desired family or manufacturer. The programmable circuitry 712 may be implemented by one or more semiconductor based (e.g., silicon based) devices. In this example, the programmable circuitry 712 implements the example array data analyzer circuitry 502, the example position calculator circuitry 504, and the example guidance calculator circuitry 506.

The programmable circuitry 712 of the illustrated example includes a local memory 713 (e.g., a cache, registers, etc.). The programmable circuitry 712 of the illustrated example is in communication with main memory 714, 716, which includes a volatile memory 714 and a non-volatile memory 716, by a bus 718. The volatile memory 714 may be implemented by Synchronous Dynamic Random Access Memory (SDRAM), Dynamic Random Access Memory (DRAM), RAMBUS^{®} Dynamic Random Access Memory (RDRAM^{®}), and/or any other type of RAM device. The non-volatile memory 716 may be implemented by flash memory and/or any other desired type of memory device. Access to the main memory 714, 716 of the illustrated example is controlled by a memory controller 717. In some examples, the memory controller 717 may be implemented by one or more integrated circuits, logic circuits, microcontrollers from any desired family or manufacturer, or any other type of circuitry to manage the flow of data going to and from the main memory 714, 716.

The programmable circuitry platform 700 of the illustrated example also includes interface circuitry 720. The interface circuitry 720 may be implemented by hardware in accordance with any type of interface standard, such as an Ethernet interface, a universal serial bus (USB) interface, a Bluetooth^{®} interface, a near field communication (NFC) interface, a Peripheral Component Interconnect (PCI) interface, and/or a Peripheral Component Interconnect Express (PCIe) interface.

In the illustrated example, one or more input devices 722 are connected to the interface circuitry 720. The input device(s) 722 permit(s) a user (e.g., a human user, a machine user, etc.) to enter data and/or commands into the programmable circuitry 712. The input device(s) 722 can be implemented by, for example, an audio sensor, a microphone, a camera (still or video), a keyboard, a button, a mouse, a touchscreen, a trackpad, a trackball, an isopoint device, and/or a voice recognition system.

One or more output devices 724 are also connected to the interface circuitry 720 of the illustrated example. The output device(s) 724 can be implemented, for example, by display devices (e.g., a light emitting diode (LED), an organic light emitting diode (OLED), a liquid crystal display (LCD), a cathode ray tube (CRT) display, an in-place switching (IPS) display, a touchscreen, etc.), a tactile output device, a printer, and/or speaker. The interface circuitry 720 of the illustrated example, thus, typically includes a graphics driver card, a graphics driver chip, and/or graphics processor circuitry such as a GPU.

The interface circuitry 720 of the illustrated example also includes a communication device such as a transmitter, a receiver, a transceiver, a modem, a residential gateway, a wireless access point, and/or a network interface to facilitate exchange of data with external machines (e.g., computing devices of any kind) by a network 726. The communication can be by, for example, an Ethernet connection, a digital subscriber line (DSL) connection, a telephone line connection, a coaxial cable system, a satellite system, a beyond-line-of-sight wireless system, a line-of-sight wireless system, a cellular telephone system, an optical connection, etc.

The programmable circuitry platform 700 of the illustrated example also includes one or more mass storage discs or devices 728 to store firmware, software, and/or data. Examples of such mass storage discs or devices 728 include magnetic storage devices (e.g., floppy disk, drives, HDDs, etc.), optical storage devices (e.g., Blu-ray disks, CDs, DVDs, etc.), RAID systems, and/or solid-state storage discs or devices such as flash memory devices and/or SSDs.

The machine readable instructions 732, which may be implemented by the machine readable instructions of FIGS. 6, may be stored in the mass storage device 728, in the volatile memory 714, in the non-volatile memory 716, and/or on at least one non-transitory computer readable storage medium such as a CD or DVD which may be removable.

FIG. 8 is a block diagram of an example implementation of the programmable circuitry 712 of FIG. 7. In this example, the programmable circuitry 712 of FIG. 7 is implemented by a microprocessor 800. For example, the microprocessor 800 may be a general-purpose microprocessor (e.g., general-purpose microprocessor circuitry). The microprocessor 800 executes some or all of the machine-readable instructions of the flowchart of FIG. 6 to effectively instantiate the circuitry of FIG. 5 as logic circuits to perform operations corresponding to those machine readable instructions. In some such examples, the circuitry of FIG. 5 is instantiated by the hardware circuits of the microprocessor 800 in combination with the machine-readable instructions. For example, the microprocessor 800 may be implemented by multi-core hardware circuitry such as a CPU, a DSP, a GPU, an XPU, etc. Although it may include any number of example cores 802 (e.g., 1 core), the microprocessor 800 of this example is a multi-core semiconductor device including N cores. The cores 802 of the microprocessor 800 may operate independently or may cooperate to execute machine readable instructions. For example, machine code corresponding to a firmware program, an embedded software program, or a software program may be executed by one of the cores 802 or may be executed by multiple ones of the cores 802 at the same or different times. In some examples, the machine code corresponding to the firmware program, the embedded software program, or the software program is split into threads and executed in parallel by two or more of the cores 802. The software program may correspond to a portion or all of the machine readable instructions and/or operations represented by the flowchart of FIG. 6.

The cores 802 may communicate by a first example bus 804. In some examples, the first bus 804 may be implemented by a communication bus to effectuate communication associated with one(s) of the cores 802. For example, the first bus 804 may be implemented by at least one of an Inter-Integrated Circuit (I2C) bus, a Serial Peripheral Interface (SPI) bus, a PCI bus, or a PCIe bus. Additionally, or alternatively, the first bus 804 may be implemented by any other type of computing or electrical bus. The cores 802 may obtain data, instructions, and/or signals from one or more external devices by example interface circuitry 806. The cores 802 may output data, instructions, and/or signals to the one or more external devices by the interface circuitry 806. Although the cores 802 of this example include example local memory 820 (e.g., Level 1 (L1) cache that may be split into an L1 data cache and an L1 instruction cache), the microprocessor 800 also includes example shared memory 810 that may be shared by the cores (e.g., Level 2 (L2 cache)) for high-speed access to data and/or instructions. Data and/or instructions may be transferred (e.g., shared) by writing to and/or reading from the shared memory 810. The local memory 820 of each of the cores 802 and the shared memory 810 may be part of a hierarchy of storage devices including multiple levels of cache memory and the main memory (e.g., the main memory 714, 716 of FIG. 7). Typically, higher levels of memory in the hierarchy exhibit lower access time and have smaller storage capacity than lower levels of memory. Changes in the various levels of the cache hierarchy are managed (e.g., coordinated) by a cache coherency policy.

Each core 802 may be referred to as a CPU, DSP, GPU, etc., or any other type of hardware circuitry. Each core 802 includes control unit circuitry 814, arithmetic and logic (AL) circuitry (sometimes referred to as an ALU) 816, a plurality of registers 818, the local memory 820, and a second example bus 822. Other structures may be present. For example, each core 802 may include vector unit circuitry, single instruction multiple data (SINM) unit circuitry, load/store unit (LSU) circuitry, branch/jump unit circuitry, floating-point unit (FPU) circuitry, etc. The control unit circuitry 814 includes semiconductor-based circuits structured to control (e.g., coordinate) data movement within the corresponding core 802. The AL circuitry 816 includes semiconductor-based circuits structured to perform one or more mathematic and/or logic operations on the data within the corresponding core 802. The AL circuitry 816 of some examples performs integer based operations. In other examples, the AL circuitry 816 also performs floating-point operations. In yet other examples, the AL circuitry 816 may include first AL circuitry that performs integer-based operations and second AL circuitry that performs floating-point operations. In some examples, the AL circuitry 816 may be referred to as an Arithmetic Logic Unit (ALU).

The registers 818 are semiconductor-based structures to store data and/or instructions such as results of one or more of the operations performed by the AL circuitry 816 of the corresponding core 802. For example, the registers 818 may include vector register(s), SIMD register(s), general-purpose register(s), flag register(s), segment register(s), machine-specific register(s), instruction pointer register(s), control register(s), debug register(s), memory management register(s), machine check register(s), etc. The registers 818 may be arranged in a bank as shown in FIG. 8. Alternatively, the registers 818 may be organized in any other arrangement, format, or structure, such as by being distributed throughout the core 802 to shorten access time. The second bus 822 may be implemented by at least one of an I2C bus, a SPI bus, a PCI bus, or a PCIe bus.

Each core 802 and/or, more generally, the microprocessor 800 may include additional and/or alternate structures to those shown and described above. For example, one or more clock circuits, one or more power supplies, one or more power gates, one or more cache home agents (CHAs), one or more converged/common mesh stops (CMSs), one or more shifters (e.g., barrel shifter(s)) and/or other circuitry may be present. The microprocessor 800 is a semiconductor device fabricated to include many transistors interconnected to implement the structures described above in one or more integrated circuits (ICs) contained in one or more packages.

The microprocessor 800 may include and/or cooperate with one or more accelerators (e.g., acceleration circuitry, hardware accelerators, etc.). In some examples, accelerators are implemented by logic circuitry to perform certain tasks more quickly and/or efficiently than can be done by a general-purpose processor. Examples of accelerators include ASICs and FPGAs such as those discussed herein. A GPU, DSP and/or other programmable device can also be an accelerator. Accelerators may be on-board the microprocessor 800, in the same chip package as the microprocessor 800 and/or in one or more separate packages from the microprocessor 800.

FIG. 9 is a block diagram of another example implementation of the programmable circuitry 712 of FIG. 7. In this example, the programmable circuitry 712 is implemented by FPGA circuitry 900. For example, the FPGA circuitry 900 may be implemented by an FPGA. The FPGA circuitry 900 can be used, for example, to perform operations that could otherwise be performed by the example microprocessor 800 of FIG. 8 executing corresponding machine readable instructions. However, once configured, the FPGA circuitry 900 instantiates the operations and/or functions corresponding to the machine readable instructions in hardware and, thus, can often execute the operations/functions faster than they could be performed by a general-purpose microprocessor executing the corresponding software.

More specifically, in contrast to the microprocessor 800 of FIG. 8 described above (which is a general purpose device that may be programmed to execute some or all of the machine readable instructions represented by the flowchart of FIG. 6 but whose interconnections and logic circuitry are fixed once fabricated), the FPGA circuitry 900 of the example of FIG. 9 includes interconnections and logic circuitry that may be configured, structured, programmed, and/or interconnected in different ways after fabrication to instantiate, for example, some or all of the operations/functions corresponding to the machine readable instructions represented by the flowchart of FIG. 6. In particular, the FPGA circuitry 900 may be thought of as an array of logic gates, interconnections, and switches. The switches can be programmed to change how the logic gates are interconnected by the interconnections, effectively forming one or more dedicated logic circuits (unless and until the FPGA circuitry 900 is reprogrammed). The configured logic circuits enable the logic gates to cooperate in different ways to perform different operations on data received by input circuitry. Those operations may correspond to some or all of the instructions (e.g., the software and/or firmware) represented by the flowchart of FIG. 6. As such, the FPGA circuitry 900 may be configured and/or structured to effectively instantiate some or all of the operations/functions corresponding to the machine readable instructions of the flowchart of FIG. 6 as dedicated logic circuits to perform the operations/functions corresponding to those software instructions in a dedicated manner analogous to an ASIC. Therefore, the FPGA circuitry 900 may perform the operations/functions corresponding to the some or all of the machine readable instructions of FIG. 6 faster than the general-purpose microprocessor can execute the same.

In the example of FIG. 9, the FPGA circuitry 900 is configured and/or structured in response to being programmed (and/or reprogrammed one or more times) based on a binary file. In some examples, the binary file may be compiled and/or generated based on instructions in a hardware description language (HDL) such as Lucid, Very High Speed Integrated Circuits (VHSIC) Hardware Description Language (VHDL), or Verilog. For example, a user (e.g., a human user, a machine user, etc.) may write code or a program corresponding to one or more operations/functions in an HDL; the code/program may be translated into a low-level language as needed; and the code/program (e.g., the code/program in the low-level language) may be converted (e.g., by a compiler, a software application, etc.) into the binary file. In some examples, the FPGA circuitry 900 of FIG. 9 may access and/or load the binary file to cause the FPGA circuitry 900 of FIG. 9 to be configured and/or structured to perform the one or more operations/functions. For example, the binary file may be implemented by a bit stream (e.g., one or more computer-readable bits, one or more machine-readable bits, etc.), data (e.g., computer-readable data, machine-readable data, etc.), and/or machine-readable instructions accessible to the FPGA circuitry 900 of FIG. 9 to cause configuration and/or structuring of the FPGA circuitry 900 of FIG. 9, or portion(s) thereof.

In some examples, the binary file is compiled, generated, transformed, and/or otherwise output from a uniform software platform utilized to program FPGAs. For example, the uniform software platform may translate first instructions (e.g., code or a program) that correspond to one or more operations/functions in a high-level language (e.g., C, C++, Python, etc.) into second instructions that correspond to the one or more operations/functions in an HDL. In some such examples, the binary file is compiled, generated, and/or otherwise output from the uniform software platform based on the second instructions. In some examples, the FPGA circuitry 900 of FIG. 9 may access and/or load the binary file to cause the FPGA circuitry 900 of FIG. 9 to be configured and/or structured to perform the one or more operations/functions. For example, the binary file may be implemented by a bit stream (e.g., one or more computer-readable bits, one or more machine-readable bits, etc.), data (e.g., computer-readable data, machine-readable data, etc.), and/or machine-readable instructions accessible to the FPGA circuitry 900 of FIG. 9 to cause configuration and/or structuring of the FPGA circuitry 900 of FIG. 9, or portion(s) thereof.

The FPGA circuitry 900 of FIG. 9, includes example input/output (I/O) circuitry 902 to obtain and/or output data to/from example configuration circuitry 904 and/or external hardware 906. For example, the configuration circuitry 904 may be implemented by interface circuitry that may obtain a binary file, which may be implemented by a bit stream, data, and/or machine-readable instructions, to configure the FPGA circuitry 900, or portion(s) thereof. In some such examples, the configuration circuitry 904 may obtain the binary file from a user, a machine (e.g., hardware circuitry (e.g., programmable or dedicated circuitry) that may implement an Artificial Intelligence/Machine Learning (AI/ML) model to generate the binary file), etc., and/or any combination(s) thereof). In some examples, the external hardware 906 may be implemented by external hardware circuitry. For example, the external hardware 906 may be implemented by the microprocessor 800 of FIG. 8.

The FPGA circuitry 900 also includes an array of example logic gate circuitry 908, a plurality of example configurable interconnections 910, and example storage circuitry 912. The logic gate circuitry 908 and the configurable interconnections 910 are configurable to instantiate one or more operations/functions that may correspond to at least some of the machine readable instructions of FIGS. 6 and/or other desired operations. The logic gate circuitry 908 shown in FIG. 9 is fabricated in blocks or groups. Each block includes semiconductor-based electrical structures that may be configured into logic circuits. In some examples, the electrical structures include logic gates (e.g., And gates, Or gates, Nor gates, etc.) that provide basic building blocks for logic circuits. Electrically controllable switches (e.g., transistors) are present within each of the logic gate circuitry 908 to enable configuration of the electrical structures and/or the logic gates to form circuits to perform desired operations/functions. The logic gate circuitry 908 may include other electrical structures such as look-up tables (LUTs), registers (e.g., flip-flops or latches), multiplexers, etc.

The configurable interconnections 910 of the illustrated example are conductive pathways, traces, vias, or the like that may include electrically controllable switches (e.g., transistors) whose state can be changed by programming (e.g., using an HDL instruction language) to activate or deactivate one or more connections between one or more of the logic gate circuitry 908 to program desired logic circuits.

The storage circuitry 912 of the illustrated example is structured to store result(s) of the one or more of the operations performed by corresponding logic gates. The storage circuitry 912 may be implemented by registers or the like. In the illustrated example, the storage circuitry 912 is distributed amongst the logic gate circuitry 908 to facilitate access and increase execution speed.

The example FPGA circuitry 900 of FIG. 9 also includes example dedicated operations circuitry 914. In this example, the dedicated operations circuitry 914 includes special purpose circuitry 916 that may be invoked to implement commonly used functions to avoid the need to program those functions in the field. Examples of such special purpose circuitry 916 include memory (e.g., DRAM) controller circuitry, PCIe controller circuitry, clock circuitry, transceiver circuitry, memory, and multiplier-accumulator circuitry. Other types of special purpose circuitry may be present. In some examples, the FPGA circuitry 900 may also include example general purpose programmable circuitry 918 such as an example CPU 920 and/or an example DSP 922. Other general purpose programmable circuitry 918 may additionally or alternatively be present such as a GPU, an XPU, etc., that can be programmed to perform other operations.

Although FIGS. 8 and 9 illustrate two example implementations of the programmable circuitry 712 of FIG. 7, many other approaches are contemplated. For example, FPGA circuitry may include an on-board CPU, such as one or more of the example CPU 920 of FIG. 8. Therefore, the programmable circuitry 712 of FIG. 7 may additionally be implemented by combining at least the example microprocessor 800 of FIG. 8 and the example FPGA circuitry 900 of FIG. 9. In some such hybrid examples, one or more cores 802 of FIG. 8 may execute a first portion of the machine readable instructions represented by the flowchart of FIG. 6 to perform first operation(s)/function(s), the FPGA circuitry 900 of FIG. 9 may be configured and/or structured to perform second operation(s)/function(s) corresponding to a second portion of the machine readable instructions represented by the flowchart of FIG. 6, and/or an ASIC may be configured and/or structured to perform third operation(s)/function(s) corresponding to a third portion of the machine readable instructions represented by the flowchart of FIG. 6.

It should be understood that some or all of the circuitry of FIG. 5 may, thus, be instantiated at the same or different times. For example, same and/or different portion(s) of the microprocessor 800 of FIG. 8 may be programmed to execute portion(s) of machine-readable instructions at the same and/or different times. In some examples, same and/or different portion(s) of the FPGA circuitry 900 of FIG. 9 may be configured and/or structured to perform operations/functions corresponding to portion(s) of machine-readable instructions at the same and/or different times.

In some examples, some or all of the circuitry of FIG. 5 may be instantiated, for example, in one or more threads executing concurrently and/or in series. For example, the microprocessor 800 of FIG. 8 may execute machine readable instructions in one or more threads executing concurrently and/or in series. In some examples, the FPGA circuitry 900 of FIG. 9 may be configured and/or structured to carry out operations/functions concurrently and/or in series. Moreover, in some examples, some or all of the circuitry of FIG. 5 may be implemented within one or more virtual machines and/or containers executing on the microprocessor 800 of FIG. 8.

In some examples, the programmable circuitry 712 of FIG. 7 may be in one or more packages. For example, the microprocessor 800 of FIG. 8 and/or the FPGA circuitry 900 of FIG. 9 may be in one or more packages. In some examples, an XPU may be implemented by the programmable circuitry 712 of FIG. 7, which may be in one or more packages. For example, the XPU may include a CPU (e.g., the microprocessor 800 of FIG. 8, the CPU 920 of FIG. 9, etc.) in one package, a DSP (e.g., the DSP 922 of FIG. 9) in another package, a GPU in yet another package, and an FPGA (e.g., the FPGA circuitry 900 of FIG. 9) in still yet another package.

Example methods, apparatus, systems, and articles of manufacture to enable effective vision-based guidance of vehicles are disclosed herein. Further examples and combinations thereof include the following:
Example 1 includes a landing pad for vision-based guidance of a vehicle, the landing pad comprising a first perimeter of a landing area defined by the landing pad, the first perimeter having a first array of first light sources, and a second perimeter having a second array of second light sources, the second perimeter around the first perimeter, at least two of the first or second light sources having a different light characteristic to define a pattern to be detected by an image sensor of the vehicle for guiding the vehicle toward or away from the landing area.
Example 2 includes the landing pad as defined in example 1, wherein at least one of the first light sources has an increased light intensity relative to at least one of the second light sources.
Example 3 includes the landing pad as defined in any of examples 1 or 2, wherein the light characteristic includes at least one of a light intensity, a spectrum, a color or a brightness.
Example 4 includes the landing pad as defined in any of examples 1 to 3, wherein at least one of the first light sources is operated at a first repeating pattern that is different from a second repeating pattern of at least one of the second light sources.
Example 5 includes the landing pad as defined in any of examples 1 to 4, wherein the first and second perimeters each have a quadrilateral shape.
Example 6 includes the landing pad as defined in any of examples 1 to 5, wherein the landing pad is foldable.
Example 7 includes the landing pad as defined in any of examples 1 to 6, wherein the pattern is defined based on locations and relative positions of the first and second light sources.
Example 8 includes an apparatus to guide a vehicle toward or away from a landing pad, the apparatus comprising interface circuitry communicatively coupled to an image sensor supported by the vehicle, machine readable instructions, and programmable circuitry to at least one of instantiate or execute the machine readable instructions to identify, based on output from the image sensor, first and second perimeters of a landing area of the landing pad, the first perimeter having a first array of first light sources and the second perimeter having a second array of second light sources, wherein at least two of the first and second light sources have a different light characteristic to define a pattern, the light characteristic corresponding to at least one of a light intensity, a spectrum, a color or a brightness, calculate a position of the vehicle relative to the landing pad based on the pattern, and guide movement of the vehicle based on the position of the vehicle relative to the landing pad.
Example 9 includes the apparatus as defined in example 8, wherein the programmable circuitry is to at least one of instantiate or execute the machine readable instructions to identify the second perimeter at a first position of the vehicle and identify the first perimeter at a second position of the vehicle, the second position being closer to the landing pad than the first position.
Example 10 includes the apparatus as defined in any of examples 8 or 9, wherein the programmable circuitry is to at least one of instantiate or execute the machine readable instructions to identify the first and second perimeters based on comparing first light intensities the first light sources and second light intensities the second light sources to identify the pattern.
Example 11 includes the apparatus as defined in any of examples 8 to 10, wherein the programmable circuitry is to at least one of instantiate or execute the machine readable instructions to identify the first and second perimeters based on identifying a repeating pattern of at least one of the first and second light sources.
Example 12 includes the apparatus as defined in any of examples 8 to 11, wherein the programmable circuitry is to at least one of instantiate or execute the machine readable instructions to calculate at least one of an attitude of the vehicle or alignment of the image sensor with respect to the landing pad.
Example 13 includes the apparatus as defined in any of examples 8 to 12, wherein the position of the vehicle relative to the landing pad is calculated based on a known spatial relationship between the first and second perimeters in combination with angular data associated with the image sensor.
Example 14 includes the apparatus as defined in any of examples 8 to 13, wherein the programmable circuitry is to at least one of instantiate or execute the machine readable instructions to generate a vector based on the pattern.
Example 15 includes the apparatus as defined in example 14, wherein the vector is generated based on different light intensities based on at least two of the first and second light sources.
Example 16 includes a non-transitory machine readable storage medium comprising instructions to cause programmable circuitry to at least identify, based on output from an image sensor supported by a vehicle, first and second perimeters of a landing area of a landing pad, the second perimeter around the first perimeter, the first perimeter having a first array of first light sources and the second perimeter having a second array of second light sources, at least two of the first and second lighting sources having a different light characteristic to define a pattern, calculate a relative position of the vehicle to the landing pad based on the pattern and at least one distance associated with the identified first and second perimeters, and guide movement of the vehicle based on the relative position.
Example 17 includes the non-transitory machine readable storage medium as defined in example 16, wherein the instructions cause the programmable circuitry to determine a vector corresponding to a star pattern of the first and second lighting sources, and wherein the relative position is further calculated based on the vector.
Example 18 includes the non-transitory machine readable storage medium as defined in any of examples 16 or 17, wherein the instructions cause the programmable circuitry to combine the output from the image sensor with at least one of inertial data or attitude data via a Kalman filter.
Example 19 includes the non-transitory machine readable storage medium as defined in any of examples 16 to 18, wherein the instructions cause the programmable circuitry to identify the second perimeter at a first position of the vehicle and identify the first perimeter at a second position of the vehicle, the second position closer to the landing pad than the first position.
Example 20 includes the non-transitory machine readable storage medium as defined in any of examples 16 to 19, wherein the instructions cause the programmable circuitry to determine at least one known distance corresponding to a two-dimensional pattern of the landing pad based on the identified first and second perimeters.

From the foregoing, it will be appreciated that example systems, apparatus, articles of manufacture, and methods have been disclosed that enable cost-effective guidance of vehicles. Further, examples disclosed herein can be relatively quick to deploy. Examples disclosed herein can also save weight and/or space of vehicles, such as aircraft, watercraft or spacecraft, for example. Disclosed systems, apparatus, articles of manufacture, and methods improve the efficiency of using a computing device by reducing computational needs typically associated with high precision guidance systems. Disclosed systems, apparatus, articles of manufacture, and methods are accordingly directed to one or more improvement(s) in the operation of a machine such as a computer or other electronic and/or mechanical device. Examples disclosed herein can utilize image data with relatively low throughput, thereby saving computational and/or data transfer resources. Further, examples disclosed herein can enable utilization of relatively inexpensive cameras as opposed to high resolution cameras typically utilized in vision-based guidance.

"Including" and "comprising" (and all forms and tenses thereof) are used herein to be open ended terms. Thus, whenever a claim employs any form of "include" or "comprise" (e.g., comprises, includes, comprising, including, having, etc.) as a preamble or within a claim recitation of any kind, it is to be understood that additional elements, terms, etc., may be present without falling outside the scope of the corresponding claim or recitation. As used herein, when the phrase "at least" is used as the transition term in, for example, a preamble of a claim, it is open-ended in the same manner as the term "comprising" and "including" are open ended. The term "and/or" when used, for example, in a form such as A, B, and/or C refers to any combination or subset of A, B, C such as (1) A alone, (2) B alone, (3) C alone, (4) A with B, (5) A with C, (6) B with C, or (7) A with B and with C. As used herein in the context of describing structures, components, items, objects and/or things, the phrase "at least one of A and B" is intended to refer to implementations including any of (1) at least one A, (2) at least one B, or (3) at least one A and at least one B. Similarly, as used herein in the context of describing structures, components, items, objects and/or things, the phrase "at least one of A or B" is intended to refer to implementations including any of (1) at least one A, (2) at least one B, or (3) at least one A and at least one B. As used herein in the context of describing the performance or execution of processes, instructions, actions, activities and/or steps, the phrase "at least one of A and B" is intended to refer to implementations including any of (1) at least one A, (2) at least one B, or (3) at least one A and at least one B. Similarly, as used herein in the context of describing the performance or execution of processes, instructions, actions, activities and/or steps, the phrase "at least one of A or B" is intended to refer to implementations including any of (1) at least one A, (2) at least one B, or (3) at least one A and at least one B.

As used herein, singular references (e.g., "a", "an", "first", "second", etc.) do not exclude a plurality. The term "a" or "an" object, as used herein, refers to one or more of that object. The terms "a" (or "an"), "one or more", and "at least one" are used interchangeably herein. Furthermore, although individually listed, a plurality of means, elements, or actions may be implemented by, e.g., the same entity or object. Additionally, although individual features may be included in different examples or claims, these may possibly be combined, and the inclusion in different examples or claims does not imply that a combination of features is not feasible and/or advantageous.

The following claims are hereby incorporated into this Detailed Description by this reference. Although certain example systems, apparatus, articles of manufacture, and methods have been disclosed herein, the scope of coverage of this patent is not limited thereto. On the contrary, this patent covers all systems, apparatus, articles of manufacture, and methods fairly falling within the scope of the claims of this patent.

## Claims

1. A landing pad (102) for vision-based guidance of a vehicle (101), the landing pad comprising:
a first perimeter (134, 203, 204, 206, 208) of a landing area (136) defined by the landing pad, the first perimeter having a first array of first light sources (220b, 220c, 220d, 220e, 220f); and
a second perimeter (132) having a second array of second light sources (220a), the second perimeter around the first perimeter, at least two of the first or second light sources having a different light characteristic to define a pattern to be detected by an image sensor (112) of the vehicle for guiding the vehicle toward or away from the landing area.

2. The landing pad as defined in claim 1, wherein at least one of the first light sources has an increased light intensity relative to at least one of the second light sources.

3. The landing pad as defined in claim 1 or 2, wherein the light characteristic includes at least one of light intensity, a spectrum, a color or a brightness.

4. The landing pad as defined in any of claims 1 to 3, wherein at least one of the first light sources is operated at a first repeating pattern that is different from a second repeating pattern of at least one of the second light sources.

5. The landing pad as defined in any of claims 1 to 4, wherein the first and second perimeters each have a quadrilateral shape.

6. The landing pad as defined in any of claims 1 to 5, wherein the landing pad is foldable.

7. The landing pad as defined in any of claims 1 to 6, wherein the pattern is defined based on locations and relative positions of the first and second light sources.

8. An apparatus to guide a vehicle toward or away from a landing pad, the apparatus comprising:
interface circuitry (720) communicatively coupled to an image sensor supported by the vehicle;
machine readable instructions (732); and
programmable circuitry (712) to at least one of instantiate or execute the machine readable instructions to:
identify, based on output from the image sensor, first and second perimeters of a landing area of the landing pad, the first perimeter having a first array of first light sources and the second perimeter having a second array of second light sources, wherein at least two of the first and second light sources have a different light characteristic to define a pattern, the light characteristic corresponding to at least one of a light intensity, a spectrum, a color or a brightness,
calculate a position of the vehicle relative to the landing pad based on the pattern, and
guide movement of the vehicle based on the position of the vehicle relative to the landing pad.

9. The apparatus as defined in claim 8, wherein the programmable circuitry is to at least one of instantiate or execute the machine readable instructions to identify the second perimeter at a first position of the vehicle and identify the first perimeter at a second position of the vehicle, the second position being closer to the landing pad than the first position.

10. The apparatus as defined in claim 8 or 9, wherein the programmable circuitry is to at least one of instantiate or execute the machine readable instructions to identify the first and second perimeters based on comparing first light intensities of the first light sources and second light intensities of the second light sources to identify the pattern.

11. The apparatus as defined in any of claims 8 to 10, wherein the programmable circuitry is to at least one of instantiate or execute the machine readable instructions to identify the first and second perimeters based on identifying a repeating pattern of at least one of the first and second light sources.

12. The apparatus as defined in any of claims 8 to 11, wherein the programmable circuitry is to at least one of instantiate or execute the machine readable instructions to calculate at least one of an attitude of the vehicle or alignment of the image sensor with respect to the landing pad.

13. The apparatus as defined in any of claims 8 to 12, wherein the position of the vehicle relative to the landing pad is calculated based on a known spatial relationship between the first and second perimeters in combination with angular data associated with the image sensor.

14. The apparatus as defined in any of claims 8 to 13, wherein the programmable circuitry is to at least one of instantiate or execute the machine readable instructions to generate a vector based on the pattern.

15. A non-transitory machine readable storage medium comprising instructions to cause programmable circuitry to at least:
identify, based on output from an image sensor supported by a vehicle, first and second perimeters of a landing area of a landing pad, the second perimeter around the first perimeter, the first perimeter having a first array of first light sources and the second perimeter having a second array of second light sources, at least two of the first and second lighting sources having a different light characteristic to define a pattern;
calculate a relative position of the vehicle to the landing pad based on the pattern and at least one distance associated with the identified first and second perimeters; and
guide movement of the vehicle based on the relative position.
